# EUROPEAN PATENT SPECIFICATION

(11) **EP 0 558 550 B1**
(45) Date of publication and mention of the grant of the patent: **12.06.1996**
(21) Application number: 91920032.9
(22) Date of filing: 15.11.1991
(51) Int. Cl.: H04N 7/12

(54) **TELEVISION TRANSMISSION SYSTEM WITH BANDWIDTH REDUCTION**
FERNSEHÜBERTRAGUNGSSYSTEM MIT BANDBREITENREDUKTION
SYSTEME DE TRANSMISSION DE SIGNAUX DE TELEVISION A LARGEUR DE BANDE REDUITE

(30) Priority: 23.11.1990 GB 9025518
(43) Date of publication of application: 08.09.1993
(73) Proprietor: BRITISH BROADCASTING CORPORATION, London W1A 1AA (GB)
(72) Inventor: WESTON, Martin Cossington House 7b Weston Road, Hampshire GU31 4JS (GB); EASTERBROOK, James, Edward, Surrey KT20 6NP (GB)
(74) Representative: Harland, Linda Jane
(86) International application number: GB9102023
(87) International publication number: WO9210060

(56) References cited:
- EP-A- 0 323 274
- EP-A- 0 352 964
- WO-A-87/04034
- WO-A-87/05770
- ELECTRONICS & WIRELESS WORLD. vol. 94, no. 1631, 30 September 1988, SUTTON GB pages 845 - 850; T. IVALL: 'Eureka 95 - a world standard?'

## Description

This invention relates to the transmission of a television signal of a given bandwidth within a channel of a lower bandwidth. This is commonly achieved by subsampling the signal before transmission, then supersampling the received signal before display. For a one-dimensional signal (such as an audio signal), the well known Nyquist sampling theory requires that the signal be pre-filtered before subsampling and post filtered after supersampling in order to prevent aliasing. The filters are required to have a pass bandwidth of less than half the subsampling frequency.

In accordance with the invention there is provided a television transmission system as set out in claim 1 and means for transmitting a television signal as set out in claim 2.

An embodiment of the invention will now be described in detail, by way of example, with reference to the drawings, in which:
Figure 1 shows diagrammatically pass band shaped for a two dimensional sampling frequency;
Figure 2 is a block diagram of a system using switched pre and post filtering means;
Figure 3 shows schematically a television transmission system in accordance with the invention; and
Figure 4 shows the system of Figure 3 in greater detail.

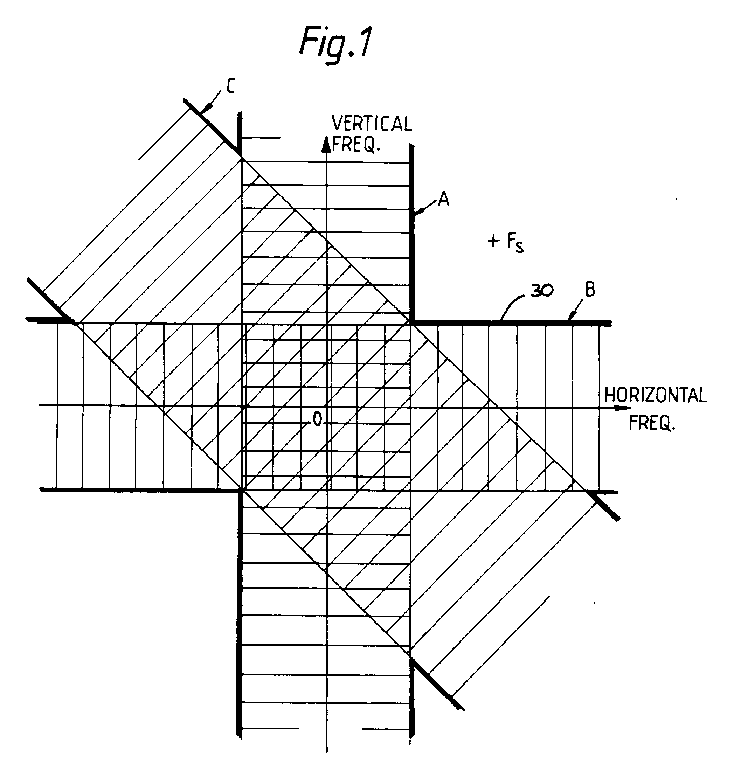

As television signals are three dimensional (horizontal, vertical and temporal), the subsampling frequency used when transmitting over a channel of lower bandwidth may also be two or three dimensional. In this case the pre and post filters have a multi-dimensional pass band shape. This shape is required to tessellate when repeated at each sampling frequency. There is usually a choice of pass bands that meet this requirement. For example, figure 1 shows the position of a two dimensional sampling frequency (Fₛ), and three possible pre and post filter ideal pass band shapes (A, B & C).

The choice of a filter pass band shape to suit a given subsampling frequency depends on the spectrum of the signal. For example, if the television signal contains no high horizontal frequencies, filter A is a good choice, as it has no effect on the signal, but does remove aliases. On the other hand, for a signal with no high vertical frequencies, filter B is appropriate. For a general television signal, a filter can be chosen that offers the best compromise response. In the example shown in figure 1, this might be filter C.

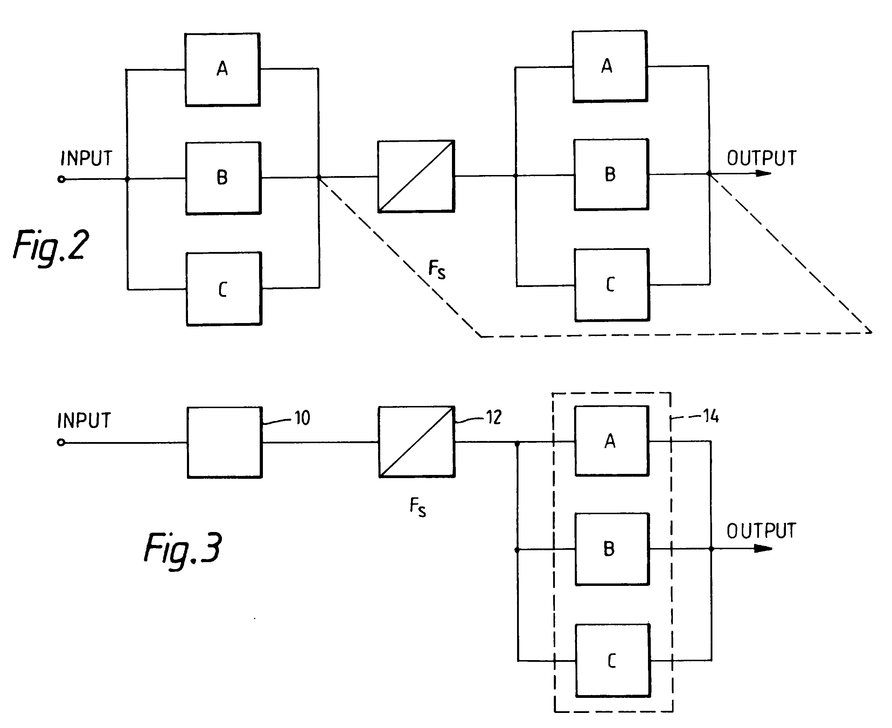

Using a fixed filter pass band shape, as described has the disadvantage that some television signals will contain frequencies that the filter rejects. Systems have been proposed where the pre and post filter responses are varied as the signal is subsampled. An example is described in European patent application EP-A-0 323 274. The transmitter chooses a filter response to suit the signal, and sends this information to the receiver, which uses a matching post filter to recover the signal. An example of a system in which pre- and post-filters are both varied by switching is the Japanese MUSE system. This is described in some detail in European patent application EP-A-0146713. A block diagram of such a system is shown in figure 2. For clarity the process by which the switch control signal is generated has been omitted.

There are several difficulties inherent in the switched filter system shown in Figure 2. Firstly, switching from one pre filter to another may introduce high frequency components that give rise to low frequency aliases when the signal is subsampled. Secondly, because the post filters are filtering a switched signal, the choice of post filter for one area of picture may be influenced by which pre filter is used for a nearby area of picture. This in turn may be influenced by which post filter is used for this area, so no clear choice can be made.

In an effort to overcome these problems, we propose to use a single fixed pre filter whilst still selecting the output of one of several post filters. This system is shown in figure 3.

As shown in Figure 3, the transmission system of the invention includes a pre-filter 10 and subsampling means 12 which subsamples the pre-filtered signal at a frequency Fs. At the receiver, there is provided post-filtering means 14 which consists of three filters, A, B and C in parallel. The filters A, B and C are selected in dependence on the characteristics of the television signal to be transmitted. The pre-filter 10 is chosen so that it effectively rejects all frequencies which would not be passed by any of the filters A, B and C of the post-filtering means 14. So, if, for example, the filters A, B and C have the pass band shapes A, B and C, respectively, shown in Figure 1, the pass band width of the pre-filter 10 is equivalent to the union 30 (outlined by a heavy line) of the three pass bands A, B and C of Figure 1.

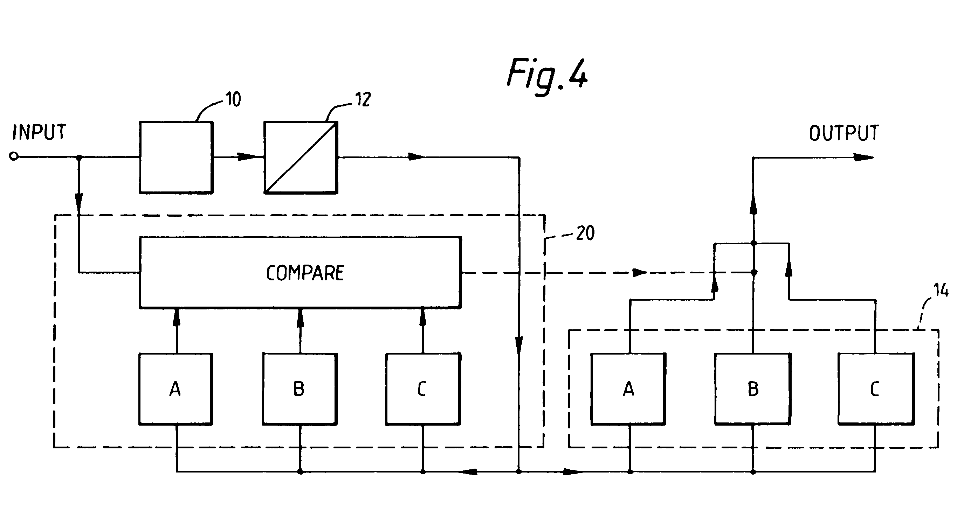

The switch by means of which the filters A, B and C are selected at the post-filtering means 14 is controlled by the transmitter, which uses a "local decoder" 20 to compare the output of each post filter with the input signals, and so determine which post filter produces the best result. An example of a complete system is shown in figure 4.

Although three filters are shown in all the examples, the actual number of filters used in a system will depend on several factors such as the cost, complexity and benefit of each filter.

## Claims

1. A television transmission system for transmitting a television signal having a first bandwidth by means of a transmission channel having a second bandwidth lower than said first bandwidth; the system including pre-filtering means for filtering the signal prior to transmission, the pre-filtered signal being subsampled for transmission, and post-filtering means at the receiver for filtering a received signal after supersampling, the post-filtering means comprising a plurality of filters each having a different pass bandwidth to the other said filters and the system further comprising control means for switching selectively between said plurality of filters in dependence on the characteristics of the television signal to be transmitted and the pre-filtering means comprising a single filter means having a pass bandwidth such that the pre-filtering means rejects substantially all frequencies which cannot be passed by any of the filters of the post-filtering means.

2. Means for transmitting a television signal having a first bandwidth by means of a transmission channel having a second bandwidth lower than said first bandwidth, the means for transmitting including pre-filtering means for filtering the signal prior to transmission and means for subsampling the pre-filtered signal for transmission to a receiver including supersampling means and post-filtering means having a plurality of filters selectable by control means in dependence on the characteristics of the television signal to be transmitted and each having a different pass bandwidth to the other said filters, the pre-filtering means comprising a single filter means having a pass bandwidth such that the pre-filtering means rejects substantially all frequencies which could not be passed by any of the filters of the post-filtering means.

## Patentansprüche

1. Fernsehübertragungssystem zum Übertragen eines Fernsehsignals, das eine erst Bandbreite aufweist, mittels eines Übertragungskanals, der eine zweite geringere Bandbreite als die erste Bandbreite aufweist; wobei das System eine Vorfiltereinrichtung umfaßt, die das Signal vor der Übertragung filtert, wobei das vorgefilterte Signal vor der Übertragung einer Unterabtastung unterzogen wird, und eine Nachfiltereinrichtung am Empfänger, die ein empfangenes Signal nach Superabtastung filtert, wobei die Nachfiltereinrichtung mehrere Filter umfaßt, die jeweils bezüglich der anderen dieser Filter eine verschiedene Durchlaßbandbreite aufweisen, und wobei das System ferner eine Steuereinrichtung umfaßt, die selektiv zwischen den mehreren Filtern abhängig von den Eigenschaften des zu übertragenden Fernsehsignals umschaltet, und wobei die Vorfiltereinrichtung eine einzelne Filtereinrichtung umfaßt, die eine Durchlaßbandbreite der Art aufweist, daß die Vorfiltereinrichtung im wesentlichen sämtliche Frequenzen zurückweist, die durch irgendeines der Filter der Nachfiltereinrichtung nicht durchgelassen werden können.

2. Einrichtung zur Übertragung eines Fernsehsignals, das eine erste Bandbreite aufweist, mittels eines Übertragungskanals, der eine zweite Bandbreite aufweist, die geringer als die erste Bandbreite ist, wobei die Einrichtung zum Übertragen eine Vorfiltereinrichtung umfaßt, die das Signal vor der Übertragung filtert, und eine Einrichtung zur Unterabtastung des vorgefilterten Signals für die Übertragung zu einem Empfänger, der eine Superabtasteinrichtung und eine Nachfiltereinrichtung umfaßt, die mehrere Filter aufweist, die durch eine Steuereinrichtung abhängig von den Eigenschaften des zu übertragenden Fernsehsignals selektierbar sind und die jeweils bezüglich der anderen dieser Filter eine verschiedene Durchlaßbandbreite aufweisen, wobei die Vorfiltereinrichtung eine einzelne Filtereinrichtung umfaßt, die eine Durchlaßbandbreite der Art aufweist, daß die Vorfiltereinrichtung im wesentlichen sämtliche Frequenzen zurückweist, die durch irgendeines der Filter der Nachfiltereinrichtung nicht durchgelassen werden könnten.

## Revendications

1. Système de transmission de télévision pour transmettre un signal de télévision ayant une première largeur de bande au moyen d'un canal de transmission ayant une deuxième largeur de bande inférieure à ladite première largeur de bande; le système comportant des moyens de pré-filtrage, pour filtrer le signal avant transmission, le signal pré-filtré étant sous-échantillonné pour la transmission, et des moyens de post-filtrage situés au niveau du récepteur, pour filtrer un signal reçu après sur-échantillonnage, les moyens de post-filtrage comprenant une pluralité de filtres ayant chacun une largeur de bande passante différente de celle des autres dits filtres, et le système comprenant en outre des moyens de commande pour commuter de façon sélective parmi ladite pluralité de filtres, en fonction des caractéristiques du signal de télévision destiné à être transmis, et les moyens de pré-filtrage comprenant des moyens de filtre unique ayant une largeur de bande passante telle que les moyens de pré-filtrage rejettent sensiblement toutes les fréquences qui ne peuvent pas passer dans aucun des filtres des moyens de post-filtrage.

2. Moyens pour transmettre un signal de télévision ayant une première largeur de bande au moyen d'un canal de transmission ayant une deuxième largeur de bande inférieure à ladite première largeur de bande, les moyens de transmission comportant des moyens de pré-filtrage pour filtrer le signal avant transmission, et des moyens pour sous-échantillonner le signal pré-filtré pour la transmission vers un récepteur comportant des moyens de sur-échantillonnage et des moyens de post-filtrage comprenant une pluralité de filtres pouvant être sélectionnés par des moyens de commande en fonction des caractéristiques du signal de télévision destiné à être transmis, et ayant chacun une largeur de bande passante différente de celle des autres dits filtres, les moyens de pré-filtrage comprenant des moyens de filtre unique ayant une largeur de bande passante telle que les moyens de pré-filtrage rejettent sensiblement toutes les fréquences qui ne peuvent pas passer dans aucun des filtres des moyens de post-filtrage.
